(19) Europäisches Patentamt
European Patent Office
Office européen des brevets

(11) **EP 3 652 104 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **18769096.1**

(22) Anmeldetag: **04.09.2018**

(51) Internationale Patentklassifikation (IPC):
**B66C 13/08** *(2006.01)* **B66C 13/22** *(2006.01)*

(52) Gemeinsame Patentklassifikation (CPC):
**B66C 13/08; B66C 13/22**

(86) Internationale Anmeldenummer:
**PCT/EP2018/073673**

(87) Internationale Veröffentlichungsnummer:
**WO 2019/048401 (14.03.2019 Gazette 2019/11)**

(54) **STEUERUNGSEINRICHTUNG FÜR EIN HEBEZEUG UND VERFAHREN ZU DESSEN BETRIEB**

CONTROL EQUIPMENT FOR A HOISTING GEAR AND METHOD FOR OPERATING THE SAME

DISPOSITIF DE COMMANDE POUR UN ENGIN DE LEVAGE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2017 EP 17190169**

(43) Veröffentlichungstag der Anmeldung:
**20.05.2020 Patentblatt 2020/21**

(73) Patentinhaber: **Siemens Aktiengesellschaft**
**80333 München (DE)**

(72) Erfinder:
• **BOCK, Marco**
**91056 Erlangen (DE)**
• **LADRA, Uwe**
**91056 Erlangen (DE)**
• **LORZ, Fabian**
**91341 Röttenbach (DE)**

(74) Vertreter: **Siemens Patent Attorneys**
**Postfach 22 16 34**
**80506 München (DE)**

(56) Entgegenhaltungen:
**WO-A1-2016/161470 DE-A1- 19 918 449**
**US-A- 5 908 122**

## EP 3 652 104 B1

**Beschreibung**

Die Erfindung betrifft eine Steuerungseinrichtung für ein Hebezeug, insbesondere ein Hubseilwerk und ein Verfahren zum Betrieb des Hebezeugs, insbesondere zur Steuerung, wobei hier unter einer Steuerung auch eine Regelung zu verstehen ist.

Hebezeuge sind beispielsweise Kräne, Portalkräne, Containerkräne, STS-Kräne, Hubwerke, Hubseilwerke etc. Hebezeuge weisen insbesondere ein Hubseilwerk auf. Hebezeuge werden insbesondere zum Heben und/oder Bewegen von Körpern, welche auch als Last bezeichnet werden können, verwendet. Der Körper wird dabei insbesondere nicht fest geführt, sondern freischwebend oder mitschwebend gehoben. Der Körper ist insbesondere ein Container und/oder ein Spreader zum Heben eines Containers. Aus EP 2 902 356 A1 ist ein Verfahren zur Dämpfung einer Pendelbewegung einer Last an einem Kran bekannt, bei dem ein Hubantrieb eines Seils angesteuert wird. Über das Seil wird die Last während der Pendelbewegung geneigt, um ein Drehmoment hervorzurufen, das der Pendelbewegung entgegenwirkt. Alternativ kann der Schwerpunkt der Last angehoben und/oder gesenkt werden um der Pendelbewegung entgegenzuwirken.

Die Druckschrift DE 20 02 745 A1 offenbart ein Verfahren zur Unterdrückung von Pendelungen einer an einem Kran aufgehängten Last. Dabei wird eine Geschwindigkeit einer Laufkatze an eine mittlere Periodendauer der pendelnden Last angepasst. In einem ersten Bereich der ersten Periode erfolgt eine maximale Beschleunigung und im letzten Bereich der letzten Periode eine gleich hohe Verzögerung der Laufkatze durchgeführt.

Aus der WO 2016/161470 A1 ist eine Transporteinrichtung zum Transport zumindest eines Containers oder einer sonstigen Last bekannt, wobei die Transporteinrichtung zumindest eine Laufkatze und zumindest eine Lastaufnahmevorrichtung und zumindest acht Hubseile aufweist, und die Lastaufnahmevorrichtung Verbindungseinrichtungen zur Befestigung des Containers oder der sonstigen Last aufweist und mittels der Hubseile heb- und senkbar an der Laufkatze hängt, wobei die Hubseile auf an der Laufkatze drehbar gelagerten Seiltrommeln aufwickelbar sind, wobei jedes Hubseil auf einer eigenen Seiltrommel aufwickelbar und/oder zumindest zum Teil aufgewickelt ist und bei allen Seiltrommeln die Drehzahl und/oder die Drehrichtung jeweils individuell einstellbar ist.

Aus den Stuttgarter Beiträgen zur Produktionsforschung ist ein Beitrag zum Thema "Force Control of Cable-Driven Parallel Robots" von Werner Kraus bekannt. In dieser Dissertation wird eine Klasse von Robotern untersucht, die Seile zur Kraftübertragung einsetzt. Da Seile nur Zugkräfte übertragen, stellen die sogenannten parallelen Seilroboter hohe Anforderung an ihre Regelung. Die in dieser Arbeit zu Grunde gelegten Seilroboter besitzen mehr Seile als Bewegungsfreiheitsgrade der Plattform und zählen damit zur Klasse der redundanten Roboter. Die Redundanz erlaubt es, die Seile gegeneinander zu verspannen. In dieser Arbeit werden zunächst ein Ansatz zur Regelung der Plattformposition und eine synchrone Regelung der Seilkräfte vorgeschlagen. Hierzu werden auf Basis der elastischen Seile dynamische Modelle entwickelt und auch die Vorwärtskinematik erweitert. Mit dem vorgeschlagenen Verfahren zur Berechnung der Seilkräfte lässt sich die interne Verspannung der Seile stufenlos einstellen. Die Untersuchungen zeigen, dass sich durch die Änderung der Vorspannung die Eigenfrequenzen der Plattform um 15-30% verschieben lassen. Durch die Wahl einer geringen Seilverspannung lässt sich der Energieverbrauch bei bleibender Leistung des Roboters um bis zu 20% senken. Zur Verifikation des Regelungskonzeptes wird die Positionsgenauigkeit des Roboters experimentell untersucht. Als Referenz dient die Steuerung des Roboters auf Basis eines geometrischen Modells, welches keine geschlossenen Regelkreise für die Plattformposition und die Seilkräfte besitzt. Im Zentrum des Arbeitsraumes konnte mit beiden Ansätzen eine vergleichbare Genauigkeit mit Nutzlast von 80kg von etwa 70 mm und 2.5° erreicht werden. Auch am Arbeitsraumrand kann mit dem vorgeschlagenen Verfahren eine vergleichbare Genauigkeit erreicht werden, da die Seile unter Spannung gehalten werden. Für Bearbeitungsprozesse wie z.B. Schleifen und gekannte hybride Positions- und Kraftregelung auf Seilroboter übertragen. Mit dem Regelungsansatz kann die Roboterplattform in einer gewünschten Richtung eine Kontaktkraft aufbringen, währenddessen die Plattform in den verbleibenden Richtungen positionsgesteuert verfahren kann. Zur Mensch-Roboter-Kooperation wird eine Admittanzregelung vorgeschlagen. Die Plattform simuliert dabei ein Feder-Masse-Dämpfer-System, mit Hilfe dessen ein virtueller Arbeitsraum realisiert wird. Die Evaluierung zeigt, dass eine Bandbreite bis 13Hz dargestellt werden kann.

Im Bereich der Hebezeuge herrscht Bedarf an einem verbesserten Betriebsverfahren, durch das beispielsweise eine verbesserte Ausnutzung von Seilen möglich ist. Hierdurch können beispielsweise auch elektrische Antriebe geringerer Leistung eingesetzt werden. Im Betrieb sind die Beanspruchungen der eingesetzten mechanischen und/oder elektrischen Komponenten zu reduzieren.

Zum Transport von Containern werden Kräne verwendet. Sowohl beim Aufnehmen des Containers mit dem (an Seilen aufgehängten) Spreader als auch beim Absetzen des Containers auf z.B. einem LKW oder auf einem Containerstapel sind schnelle und genaue Positionierungen in alle Raumrichtungen und alle Drehrichtungen notwendig. Nicht alle Bewegungsrichtungen können durch die typischen Kranachsen Katze, Hubwerk und Gantry (letzteres nur bei Stapel- oder Portalkranen vorhanden) realisiert werden. Zumindest die Drehungen des Spreaders/Containers sind damit derzeit nicht möglich. Deswegen werden Kräne mit Zusatzsystemen ausgerüstet, um diese Drehbewegungen zu realisieren. Bei STS-Kränen (insbesondere zum Beladen und/oder Entladen eines Schiffes) sind dies Hydraulikzylinder,

2

welche die Positionen einzelner Seile des Hubwerkes (Hubwerksseile) modifizieren. Bei Stapelkränen (insbesondere zum Ordnen bzw. Umordnen von Containern im hinteren Bereich des Terminals) findet man am Spreader montierte Hydraulikzylinder.

DE 199 18 449 A1 offenbart eine Steuerungseinrichtung und ein Verfahren gemäß dem Oberbegriff des Anspruchs 1 bzw. 7.

Eine Aufgabe der Erfindung ist es ein Hebezeug zu verbessern, insbesondere ist es eine Aufgabe einen Umgang mit einem Hubseilwerk zu verbessern.

Eine Lösung der Aufgabe gelingt bei einer Steuerungseinrichtung für ein Hebezeug nach Anspruch 1 bzw. bei einem Verfahren zur Steuerung eines Hebezeuges nach Anspruch 7. Weitere Ausgestaltungen ergeben sich beispielsweise nach den Ansprüchen 2 bis 6 bzw. 8 bis 18.

Eine Steuerungseinrichtung für ein Hebezeug weist eine kinematische Transformation auf. Dabei ist eine Raumlage eines Körpers und eine Orientierungslage des Körpers zur Transformation vorgesehen. Die Steuerungseinrichtung ist zum Steuern und oder Regeln vorgesehen. Mittels der Steuerungseinrichtung sind eine Vielzahl von elektrischen Antrieben ansteuerbar. Die Steuerungseinrichtung kann also Steuerungsaufgaben und/oder Regelungsaufgaben durchführen und weist insbesondere zumindest einen Prozessor, einen Speicher und eine Vielzahl von Ausgängen und/oder Eingängen auf. Die Ausgänge und/oder Eingänge können auch über ein Bussystem realisiert sein, an welches die Steuerungseinrichtung anschließbar ist. Der Körper ist insbesondere eine Last, wie z.B. ein Spreader, ein Container, ein Spreader mit Container, usw. Die Steuerungseinrichtung kann als eine Baueinheit realisiert sein, oder als eine Kombination von zumindest zwei Baueinheiten, also eine Vielzahl von Baueinheiten, welche datentechnisch miteinander verbunden sind. Dies gelingt beispielsweise über einen Rückwandbus, über ein Buskabel, über eine Funkverbindung, etc. Die Steuerungseinrichtung ist zur Ausführung von Steuerungs- und/oder Regelungsverfahren ausgeführt. Insbesondere ist die Steuerungseinrichtung derart ausgestaltet, dass bis zu 6 Freiheitsgrade eines Körpers (im Folgenden auch Last genannt), insbesondere eines starren Körpers, also insbesondere die Lage (XC,YC,ZC) (im Folgenden auch Raumlage genannt) und die Orientierung ($\alpha,\beta,\gamma$) (im Folgenden auch Orientierungslage genannt) im Raum beeinflusst werden können. Die Position, bzw. bei einer Bewegung die Positionen, können mathematisch mit p = [XC, YC, ZC, $\alpha$, $\beta$, $\gamma$]$^T$ dargestellt werden. Die Steuerungseinrichtung ist insbesondere zur Positionierung bzw. Bewegung eines Körpers mit einer Seilkinematik, insbesondere einer parallelen Seilkinematik mit m separat ansteuerbaren Seilen vorgesehen. Damit kann der Körper exakt positioniert oder gegebenenfalls auf einer vorgegebenen Bahn geführt werden. Für die betrachtete Seilkinematik entsprechen die sechs beschriebenen Freiheitsgrade den Lastkoordinaten, während die Lage der m Antriebe im Antriebskoordinatensystem betrachtet werden kann. Die Antriebe weisen insbesondere elektrische Motoren auf, welche geregelt werden können. Ein elektrischer Motor bildet mit einer Umlenkrolle für ein Seil oder mit einem Getriebe, oder mit einem Flaschenzug, etc. einen Antriebsstrang. Über die m Antriebsstränge können Drehmomente $d = [\, d_1, ..., d_m \,]^T$ eingeprägt werden, um eine Strecke (insbesondere ein Seilhubwerk) und/oder den Körper (Last) auf der vorgegebenen Bahn zu führen. Für diese Bahn wird beispielsweise steuerungsseitig, anhand eines mathematischen Modells ein optimierter Drehmomentenverlauf $d_{ffw} = [d_{ffw,1}, ... , d_{ffw,m}]^T$ berechnet. Wird beispielsweise eine Vorsteuerung verwendet, kann für die Vorsteuerung der Drehzahl $n_{soll} = [n_{soll.1}, ... , n_{soll.m}]^T$ mithilfe der Kinematik-Transformation (abgekürzt Kin-Trafo) die Sollgeschwindigkeiten aus dem sechsdimensionalen Koordinatensystem der Last in das m-dimensionale Koordinatensystem der Antriebe überführt werden. Die Kinematik des Hebezeugsystems ist insbesondere nichtlinear.

Gemäß der Erfindung ist das Hebezeug für ein Bewegen des Körpers durch das Hebezeug überbestimmt. Dabei ist insbesondere eine Optimierungseinrichtung zur Optimierung von Seilkräften vorgesehen ist. Dies gelingt insbesondere auch durch die Verwendung einer Vorsteuerung.

Die Steuerungseinrichtung für ein Hebezeug bzw. das Hebezeug, insbesondere ein Hebezeug für einen Container, ist vorteilhaft überbestimmt. Insbesondere weist das Hebezeug mehr Antriebe als Freiheitsgrade auf. So kann die Bewegung des Containers besser kontrolliert werden.

Bei einem Hebezeug, insbesondere mit Hubseilen, ist ein mechanisches System realisierbar, bei dem die Hubwerksseile an mehreren (jeweils durch elektrische Antriebe bewegte) Seilrollen befestigt sind. Je nach Anzahl der Seile und Seilrollen kann beispielsweise der Spreader und/oder Container in mehr oder weniger Freiheitsgraden bewegt werden. Die Steuerungseinrichtung ist zur Steuerung und/oder Regelung eines derartigen Systems ausgebildet um eine Positionierbewegung zu realisieren. In einer Ausgestaltung einer Steuerungseinrichtung wird zur Steuerung und/oder Regelung derartiger Systeme z.B. eine Ablaufkette mit folgenden Funktionen erstellt: Trajektorienberechnung für Container und/oder Spreader, kinematische Transformation, kaskadenregelung der (elektrischen) Antriebe.

In einer Ausgestaltung der Steuerungseinrichtung weist diese einen Lageregler auf, wobei der Lageregler insbesondere einen Eingang für die Raumlage und einen Eingang für die Orientierungslage aufweist. Der Lageregler ist insbesondere derart ausgestaltet, dass dieser für die drei Raumkoordinaten jeweils einen Teillageregler aufweist, sowie einen Teillageregler für die Orientierung.

In einer Ausgestaltung der Steuerungseinrichtung weist diese ein erstes Modell für den Körper auf. Beispielsweise werden über das erste Modell, welches insbesondere als mathematische Modell realisiert ist, in den Vorsteuerungspfaden ermittelte Drehzahlen $n_{soll}$ und Drehmomente $d_{ffw}$ an den jeweiligen Vergleichseinrichtungen der Regelschleifen aufgeschaltet. So sind sechs, sieben, acht oder mehr elektrische Antriebe regelbar. Das Regelungskonzept regelt insbesondere die aus Modellungenauigkeiten und Störungen resultierenden Regelabweichungen aus. Die Antriebsregelung arbeitet dabei insbesondere im Antriebskoordinatensystem und die Lageregelung im Koordinatensystem der Last.

In einer Ausgestaltung der Steuerungseinrichtung wird anhand eines mathematischen Lastmodells eine optimierte Drehmomentenvorsteuerung $d_{ffw} = [d_{ffw,1}, \ldots, d_{ffw,m}]^T$ für die m Antriebseinheiten (insbesondere m=8) berechnet. Hierzu sind die Masse der Last und die Lage des Massenmittelpunktes bekannt.

In einer Ausgestaltung der Steuerungseinrichtung wird ein Lastmodell verwendet. Aus einer Sollbahn $(p, \dot{p}, \ddot{p})$ gemäß einer Trajektorie $p(t)$ werden mit einer 6-dimensionalen Bewegungsgleichung

$$w = M(p)\ddot{p} + N(\dot{p}, p) + G(p)$$

mit:

    $M(p)$ die Massenmatrix
    $N(\dot{p}, p)$ die Matrix der Zentrifugal- und Corioliskräfte
    $G(p)$ die Matrix der Gewichtskräfte

die auf die Last wirkenden Kräfte berechnet. Der Kraftvektor w bezieht sich auf die Lastkoordinaten.

Mit der Gleichgewichtsbedingung $A^T(p)F = w$ kann ein sechsdimensionaler Kraftvektor $w$ in einen Seilkraftvektor $F$ transformiert werden. Der Seilkraftvektor $F = [F_1, \ldots, F_m]^T$ beinhaltet die betragsmäßige Seilkraft jedes Seils in Richtung der Antriebskoordinaten. Ein Aufstellen der Gleichgewichtsbedingung erfolgt anhand der geometrischen Anordnung der Seile. Die Matrix $A^T(p)$ beinhaltet unter anderem die m normierten Seilkraftrichtungsvektoren und die Lage der Kraftangriffspunkte.

Gemäß der Erfindung weist die Steuerungseinrichtung einen Seilkraftrechner bzw. eine Seilkraftberechnung auf. Sind in dem mechanischen Aufbau mehr Seile als Bewegungsfreiheitsgrade der Last separat ansteuerbar $m > 6$, ist die Seilkinematik überbestimmt. Damit besteht die Möglichkeit den Kraftvektor $w$ nach bestimmten Optimierungskriterien auf die $m$ Seile zu verteilen. Ein Optimierungskriterium ist die Minimierung der maximalen Seilkraft:

$$\min ( \max(F))$$

$$\text{mit: } A^T(p)F = w \,,$$

$$F > 0$$

Dieses Kriterium zielt darauf ab, die maximale Kraft im Antrieb so gering wie möglich zu halten, um die im System enthaltene Antriebsredundanz für eine günstige Antriebsdimensionierung auszunutzen.

Ein anderes Optimierungskriterium ist die Maximierung der minimalen Seilkraft:

$$\max ( \min(F))$$

$$\text{mit: } A^T(p)F = w \,,$$

$$F > 0$$

Dieses Kriterium zielt darauf ab, das Verspannungs-Niveau zu optimieren. Mit einem optimierten Verspannungs-Niveau ist die Seilkinematik robuster bzw. steifer gegenüber Lastpendeln und damit auch weniger anfällig gegen äußere Störeinflüsse wie z.B. Wind.

Wenn für eine Lastpositionierung nur die Anfangs- und Endposition von Bedeutung ist und während des Verfahrvorgangs die Last-Freiheitsgrade (Lage und Orientierung im Raum) nur innerhalb eines Toleranzbandes eingehalten werden müssen, können diese 6 Freiheitsgrade zur Optimierung herangezogen werden. Diese zusätzlichen Freiheitsgrade können gemäß den oben genannten Kriterien zur Optimierung genutzt werden (optimierte Bahn), um eine weitere Verbesserung der Seilkraftverteilung zu erhalten.

In einer Ausgestaltung der Steuerungseinrichtung weist diese ein zweites Modell für einen Antriebsstrang auf. Dies betrifft beispielsweise einen Antriebsstrang oder eine Vielzahl von Antriebssträngen, welche in Ihrer Gesamtheit wieder einen gemeinsamen Antriebsstrang bilden. So werden z.B. gemäß eines Modells des Antriebsstrangs die optimierten Seilkräfte F mit Hilfe des Antriebsstrang-Modells in die Drehmomente der Antriebsmotoren (z.B. m=8) umgerechnet:

$$d = RF + I\ddot{\psi}$$

mit:

$I = diag[I_1, \ldots, I_m]$     Diagonalmatrix Trägheitsmomente des Antriebes
$\ddot{\psi} = [\ddot{\psi}_1, \ldots, \ddot{\psi}_m]^T$     Winkelbeschleunigung der m Antriebsstränge
$R = diag[r_1, \ldots, r_m]$     Diagonalmatrix der Übersetzungsverhältnisse.

Die Matrix $R$ beinhaltet insbesondere alle Getriebeübersetzungen, die Durchmesser jeder einzelnen Seiltrommel, sowie das über die Umlenkrollen einhergehende Übersetzungsverhältnis eines Flaschenzugs.

In einer Ausgestaltung der Steuerungseinrichtung weist diese eine Vorsteuerung auf. Für eine gegebene Sollbahn ($p, \dot{p}, \ddot{p}$) in Lastkoordinaten wird mithilfe des mathematischen Modells eine optimierte Drehmomentenvorsteuerung $d_{ffw}$ berechnet. Dies betrifft insbesondere acht elektrische Antriebe für acht Seile. Durch die acht Seile ist das System überbestimmt. Durch die Überbestimmung kann eine Lastverteilung erfolgen und die Vorsteuerung zur Kraftvorsteuerung herangezogen werden. Die Last kann beispielsweise gleich auf die Seile verteilt werden.

Nach einem Verfahren zur Steuerung (also zum Steuern und/oder Regeln) eines Hebezeuges, wird zur Regelung von zumindest sechs Antrieben eine kinematische Transformation von Koordinaten eines Körpers verwendet. Die Steuerung des Hebezeuges betrifft also auch dessen Regelung. Die kinematische Transformation ist insbesondere nichtlinear. In einer Ausgestaltung des Hebezeuges weist dieses sieben oder mehr elektrische Antriebe zur Bewegung von Seilen auf, welche zum Anheben und/oder Absenken einer Last vorgesehen sind.

In einer Ausgestaltung des Verfahrens betreffen die Koordinaten eine Raumlage des Körpers und eine Orientierungslage des Körpers.

Gemäß der Erfindung sind eine Vielzahl von elektrischen Antrieben zur Positionierung des Körpers vorgesehen, wobei durch die Vielzahl der elektrischen Antriebe eine Überbestimmung erzeugt wird, wobei die Überbestimmung zu einer Verteilung von Kräften, welche auf Seile wirken, verwendet wird.

In einer Ausgestaltung des Verfahrens die Bewegung des Körpers (Last) durch eine Trajektorie vorgegeben.

In einer Ausgestaltung des Verfahrens sind Koordinatenwerte Eingangsgrößen einer Lageregelung, wobei Ausgangsgrößen der Lageregelung transformiert werden, wobei zumindest eine Eingangsgröße einer Antriebsregelung auf zumindest einer Ausgangsgröße des kinematischen Transformators basiert.

In einer Ausgestaltung des Verfahrens wird dieses bei einem Hubseilwerk mit mehreren Seilen verwendet, die mit dem Spreader verbunden sind, der wiederum die Last aufnimmt, wobei jedes Seil separat über motorgetriebene Seilwinden ansteuerbar ist. Es können auch mehrere Seile auf einen Antrieb derart zusammengeführt werden, so dass mindestens zwei Antriebe vorhanden sind und wobei ein Messsystem zur Bestimmung der Lage und Orientierung der Last im Raum vorhanden ist bzw. über ein Beobachtermodell ergänzt wird.

In einer Ausgestaltung des Verfahrens wird aus einem Sollgeschwindigkeitsverlauf einer Trajektorie des Körpers unter Verwendung einer Kinematik-Transformation ein Drehzahlsollwertverlauf der Antriebe berechnet.

In einer Ausgestaltung des Verfahrens wird eine Vorsteuerung insbesondere für Seilkräfte verwendet.

In einer Ausgestaltung des Verfahrens werden aus einer Solltrajektorie der Last über ein mathematisches Modell die Seilkräfte für die Kraftvorsteuerung der Antriebe.

In einer Ausgestaltung des Verfahrens wird zur Berechnung der Vorsteuerung ein Lastmodell und/oder ein Antriebsstrangmodell verwendet.

In einer Ausgestaltung des Verfahrens erfolgt die Regelung in einer Kaskadenstruktur. Bei der Antriebsregelung wird für die Drehzahlregelung ein PI-Regler genutzt. Im Gegensatz zur Antriebsregelung erfolgt die Lageregelung im Koordinatensystem der Last. Die Stellgröße der Lageregelung wird durch die Kinematik-Transformation in das Koordinatensystem der Antriebe überführt. Die Reglerparameter des Drehzahlregelkreises werden insbesondere "dämpfunqsoptimal" bzw. "dämpfungsoptimiert" eingestellt, so dass eine Pendelbewegung der Last möglichst nicht angeregt wird.

Aufgrund der hubhöhenabhängigen Frequenz der Pendelbewegung, werden die Regelparameter ebenfalls in Abhängigkeit der Hubhöhe adaptiert werden.

In einer Ausgestaltung des Verfahrens können Mithilfe der modellbasierten Vorsteuerung die erwarteten Drehzahlen und Drehmomente an den jeweiligen Vergleichseinrichtungen der inneren Regelschleifen aufgeschaltet werden. Das Regelungskonzept muss lediglich die aus Modellungenauigkeiten und Störungen resultierenden Regelabweichungen ausregeln.

In einer Ausgestaltung des Verfahrens erfolgt die Antriebsregelung (z.B. für m=8) in Abhängigkeit einer Hubhöhe, also adaptiert auf die Hubhöhe, wobei die Antriebsregelung derart an eine Streckendynamik der Bewegung des Körpers (Last) angepasst wird.

In einer Ausgestaltung des Verfahrens erfolgt die Antriebsregelung in Abhängigkeit einer Streckendynamik, wobei sich die Änderung der Streckendynamik insbesondere aus der Hubhöhe ergibt oder von dieser überwiegend bestimmt ist.

Die Antriebsregelung kann also in Abhängigkeit der Streckendynamik regeln, was insbesondere bei dem dynamischen Übertragungsverhalten des Systems vorteilhaft ist. Die Regelstrecke betrifft dabei insbesondere die Hubwerksantriebe, die Seile und die Last (Spreader und/oder Container). Dabei werden die Seillängen, die Trägheit, die Massen und die Seilsteifigkeit berücksichtigt.

In einer Ausgestaltung des Verfahrens erfolgt eine Lageregelung in den Koordinaten des Körpers, wobei insbesondere eine Stellgröße für die Last über eine Kinematik-Transformation in Antriebskoordinaten umgerechnet wird.

In einer Ausgestaltung des Verfahrens werden bei einem Hubseilwerk, welches überbestimmt ist und insbesondere mehr Antriebe als zu positionierende Freiheitsgrade aufweist, die zusätzlichen Freiheitsgrade für eine Optimierung der Vorsteuerung verwendet.

In einer Ausgestaltung des Verfahrens führt die Optimierung zur Minimierung der maximalen Seilkraft.

In einer Ausgestaltung des Verfahrens wird die Optimierung zur Maximierung des Verspannungs-Niveaus für die Seile des Hebezeugs herangezogen.

In einer Ausgestaltung des Verfahrens werden zur Bestimmung einer Lage oder einer Trajektorie der Last im Raum die Freiheitsgrade der Lage bzw. Orientierung im Raum zur Optimierung genutzt.

In einer Ausgestaltung des Verfahrens wird zur Berechnung einer Trajektorie ein Maximalwert einer Beschleunigung in Abhängigkeit einer Hubhöhe adaptiert.

In einer Ausgestaltung des Verfahrens wird zur Berechnung einer Trajektorie ein Maximalwert einer Beschleunigung in Abhängigkeit einer Schwerpunktlage des Körpers adaptiert.

In einer Ausgestaltung des Verfahrens wird zur Minimierung einer maximalen Seilkraft (wobei die maximale Seilkraft eine Seilkraft ist, welche nicht überschritten werden soll) eine Trajektorie gewählt und/oder verändert. Unter eine Wahl einer Trajektorie fällt dabei auch eine Berechnung einer Trajektorie. Die Seilkraft betrifft dabei die Kraft eines Seiles und/oder die Kraft aller Seile mit denen der Körper im Raum positionierbar ist. Die Trajektorie betrifft den Weg des Körpers im Raum und insbesondere auch dessen Orientierung. Die Veränderung der Position des Körpers (also insbesondere der Last) im Raum betrifft die Freiheitsgrade der Lage und/oder Orientierung im Raum. Die Reduzierung der maximalen Seilkraft ergibt sich insbesondere aus einer Optimierung der Vorsteuerung. Die Optimierung führt zur Minimierung der maximalen Seilkraft, wobei die Optimierung insbesondere auch zur Maximierung des Verspannungsniveaus herangezogen werden kann. So kann abhängig vom Weg des Körpers über die Trajektorie die Seilkraft minimiert werden und/oder die Verspannung maximiert werden, wobei eine maximale Seilkraft nicht überschritten wird. Für die Verstellung der Seile sind insbesondere mehr als sechs elektrische Antriebe vorgesehen. Es sind insbesondere acht elektrische Antriebe zur Verstellung der Seile vorgesehen, an denen sich der Körper befindet.

In einer Ausgestaltung des Verfahrens wird eine Steuerungseinrichtung in einer der beschriebenen Ausgestaltungen verwendet.

Durch die Steuerungseinrichtung zum Steuern und/oder Regeln bzw. durch das beschriebene Verfahren können sich verschiedene Vorteile ergeben. So kann eine Optimierung der Antriebsdimensionierung eines Hubseilwerkes nach verschiedenen Kriterien erfolgen. So kann durch das sich ergebende Antriebskonzept eine exakte Positionierung der Last (insbesondere Container) mit einer Regelgüte von etwa 1 cm erreicht werden. So kann durch Berücksichtigung folgender Abhängigkeiten im Antriebskonzept durch Anpassung der Regelparameter bzw. der maximalen Beschleunigungswerte eine optimierte Positionierung erreicht werden:

- Abhängigkeit der Hubhöhe und/oder
- Abhängigkeit von der Beladung (Masse) und/oder
- Abhängigkeit von der Schwerpunktlage der Last.

Durch die Steuerungseinrichtung zum Steuern und/oder Regeln bzw. durch das beschriebene Verfahren kann insbesondere ein 8-Seil Hubwerk mit Einzelantrieben verbessert werden. Zudem können sich daraus neue Wege für andere Anwendungen und Bereiche in der Kranautomatisierung ergeben.

Die der Erfindung zugrundeliegende Aufgabenstellung wird auch durch ein nicht beanspruchtes Computerprogrammprodukt gelöst, das dazu ausgebildet ist das Verfahren zu durchzuführen, bzw. die Funktionen der Steuerungseinrichtung zu realisieren. Das Computerprogrammprodukt ist insbesondere dazu ausgebildet, zumindest eine Ausführungsform des oben skizzierten Verfahrens an einem Hebezeug wie einem Kran umzusetzen.

Die der Erfindung zugrundeliegende Aufgabenstellung wird auch durch ein nicht beanspruchtes Hebezeug gelöst, welches die beschriebene Steuerungseinrichtung aufweist und/oder zur Durchführung des Verfahrens vorgesehen ist.

Die Erfindung wird im Folgenden beispielhaft anhand der Figuren 1 bis 7 näher erläutert. Gleiche Merkmale sind mit gleichen Bezugszeichen versehen. Merkmale einzelner Ausgestaltungen sind untereinander kombinierbar. Es zeigen im Einzelnen:

FIG 1    eine Containerbrücke als ein Beispiel für ein Hebezeug;
FIG 2    einen Kran;
FIG 3    ein Steuerungs- und Regelungskonzept;
FIG 4    ein Steuerungskonzept mit einer Seilkraft-Berechnung;
FIG 5    Kräfte an einem Spreader;
FIG 6    eine optimierte Bahn und
FIG 7    eine Regelungsstruktur.

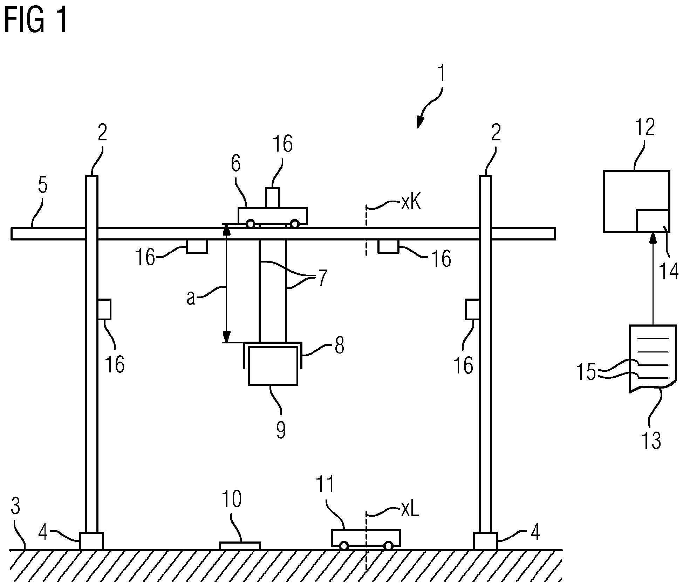

Die Darstellung nach FIG 1 zeigt eine Containerbrücke 1. Die Containerbrücke 1 weist eine Mehrzahl von Stützpfeilern 2 auf, mittels derer die Containerbrücke 1 auf einem Untergrund 3 angeordnet ist. Die Stützpfeiler 2 sind auf Schienen 4 verfahrbar. Die Verfahrrichtung ist orthogonal zur Darstellung in FIG 1, also in die Bildebene hinein bzw. aus ihr heraus. Die Stützpfeiler 2 tragen eine Traverse 5. Die Traverse 5 verläuft parallel zum Untergrund 3 und damit ebenfalls horizontal. Die Containerbrücke 1 weist weiterhin eine Laufkatze 6 auf. Die Laufkatze 6 ist auf der Traverse 5 relativ zum Untergrund verfahrbar. Die Verfahrrichtung der Laufkatze 6 ist horizontal und orthogonal zur Verfahrrichtung der Stützpfeiler 2. Die Laufkatze 6 ist über ein Seilsystem 7 mit einem Spreader 8 verbunden. Durch Verlängern bzw. Verkürzen des Seilsystems 7 kann der Spreader 8 abgesenkt bzw. angehoben werden. Zusammen mit dem Spreader 8 wird gegebenenfalls auch ein Container 9, der vom Spreader 8 gegriffen ist, mit abgesenkt bzw. angehoben. Zu jedem Zeitpunkt korrespondiert eine jeweils aktuelle Last der Laufkatze 6 mit der Masse des Spreaders 8 zuzüglich der Masse des vom Spreader 8 gegriffenen Containers 9. Es kann zwischen der Last der Laufkatze 6 und deren Belastung unterschieden werden. Die Last ist der von der Laufkatze 6 verfahrene Gegenstand als solcher, also der Spreader 8 mit oder ohne Container 9. Die Belastung der Laufkatze 6 ist die durch die Last auf die Laufkatze 6 ausgeübte Gewichtskraft. Wenn beispielsweise von der Laufkatze 6 der leere Spreader 8 verfahren wird und die Masse des Spreaders 8 5 Tonnen beträgt, so ist die Last der Spreader 8 und die Belastung 5 Tonnen. Es ist eine Lastumschlagstelle 10, 11 aufgezeigt. Es kann sich bei der Lastumschlagstelle 10, 11 beispielsweise um eine ortsfeste Lastumschlagstelle 10 handeln, d.h. eine Lastumschlagstelle, die auf dem Untergrund 3 nicht verfahrbar ist. Ein typisches Beispiel einer derartigen Lastumschlagstelle 10 ist ein Lagerplatz für einen Container 9. Alternativ kann es sich bei der Lastumschlagstelle 10, 11 um eine mobile Lastumschlagstelle 11 handeln, d.h. eine Lastumschlagstelle, die auf dem Untergrund 3 verfahrbar ist. Ein typisches Beispiel einer derartigen Lastumschlagstelle 11 ist ein AGV (automated guided vehicle). Das Umschlagsystem weist weiterhin eine Kransteuerung 12 auf. Die Kransteuerung 12 ist ein Beispiel für eine Steuerungseinrichtung. Von der Kransteuerung 12 wird das Umschlagsystem gesteuert. Die Kransteuerung 12 ist mit einem Computerprogramm 13 programmiert. Das Computerprogramm 13 ist insbesondere in einem Speicher 14 der Kransteuerung 12 in maschinenlesbarer Form hinterlegt. Das Computerprogramm 13 umfasst Maschinencode 15, der von der Kransteuerung 12 abarbeitbar ist. Die Abarbeitung des Maschinencodes 15 durch die Kransteuerung 12 bewirkt, dass die Kransteuerung 12 ein Steuerverfahren für das Umschlagsystem ausführt. Im Übrigen sind Sensoren 16 wie Kameras dargestellt. Mit diesen kann beispielsweise die Position der Last 8, welche einen Abstand a von der Katze 6 aufweist, festgestellt werden.

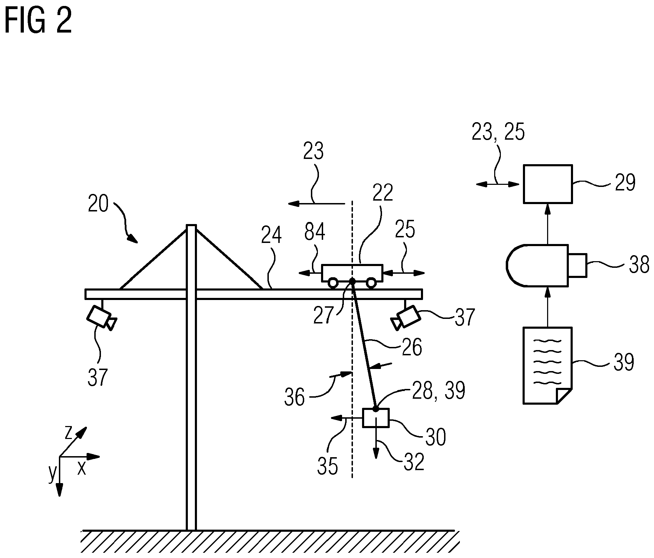

Die Darstellung nach FIG 2 zeigt schematisch in einer Seitenansicht eine Laufkatze 22 abgebildet, die zu einem Kran 20, als weiteres Beispiel für ein Hebezeug gehört. Der Kran 20 weist eine Führungsschiene 24, auf der die Laufkatze 22 entlang einer Bewegungsachse 25 beweglich angeordnet ist. Die Laufkatze 22 verfügt über einen Laufkatzenantrieb, der ein Antriebsmoment bereitstellt und eine Bewegung 23 entlang der Bewegungsachse 25 erlaubt. An der Laufkatze 22 ist über zwei oder mehr Hubwerkseile 26 eine Last 30 aufgehängt. Die Hubwerkseile 26 sind jeweils an laufkatzenseitigen Aufhängungspunkten 27 und an lastseitigen Aufhängungspunkten 28 befestigt. In jedem der laufkatzenseitigen Aufhängungspunkte 27 liegt eine Lagerreaktion vor, die je nach der Bauform des jeweiligen laufkatzenseitigen Aufhängungspunkts 27 Lagerreaktionskräfte und/oder Lagerreaktionsmomente umfasst. Jedem der Hubseilwerke 26 ist ferner ein Hubantrieb zugeordnet, über den das zugehörige Hubwerkseil 26 auf- oder abrollbar ist. Ein Aufrollen bzw. Abrollen eines Hubwerkseils 26 verringert bzw. erhöht dessen freie Länge. Durch die Bewegung 23 der Laufkatze 22 erfolgt eine Auslenkung 35,32 der Last 30 aus der Vertikalen. Durch die Auslenkung der Last 20 ergibt sich zwischen einem Lastbezugspunkt 29 und einem Laufkatzenbezugspunkt 21 eine Distanz 33. Durch die Auslenkung der Last 30 wird u.U.

eine Pendelbewegung 36 hervorgerufen, die ein Platzieren der Last 30 erschweren kann. Die Laufkatze 22 ist mit einer Steuerungseinrichtung 29 versehen, auf der ein Computerprogrammprodukt 39 ausführbar abgespeichert ist. Das Computerprogrammprodukt ist dazu ausgelegt, zumindest eine Ausführungsform des erfindungsgemäßen Verfahrens durchzuführen. Mit dem Computerprogrammprodukt können Signale einer Messvorrichtung 38 mit berücksichtigt werden.

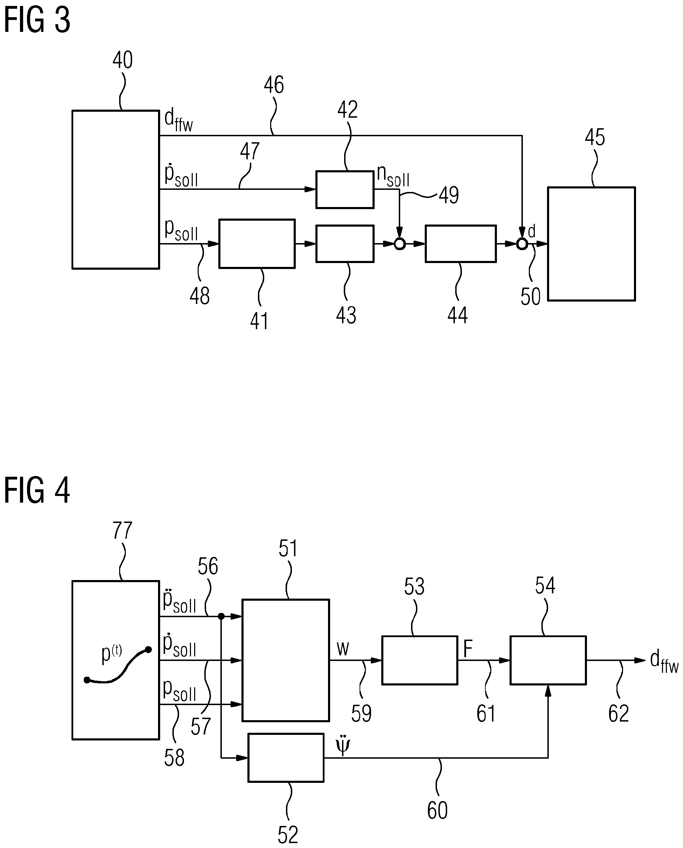

Die Darstellung nach FIG 3 zeigt ein Steuerungs- und Regelungskonzept. Gezeigt ist eine Steuerung und Stellgrößengenerierung 40, welche Parameter abhängig von einer Lage p ausgibt. Die Lage betrifft insbesondere eine Raumlage eines Punktes (XC,YC,ZC) und eine Orientierung ($\alpha$, $\beta$, $\gamma$) eines Körpers im Raum, mit p = [XC, YC, ZC, $\alpha$, $\beta$, $\gamma$]$^T$. Über eine Anzahl von $m$ Antriebssträngen mit elektrischen Motoren können Drehmomente d = [$d_1$, ... , $d_m$]$^T$ 50 vorgegeben werden, um beispielsweise eine Strecke 45 (das Seilhubwerk) auf der vorgegebenen Bahn zu führen. Für diese Bahn wird Steuerungsseitig, anhand eines mathematischen Modells ein optimierter Drehmomentenverlauf $d_{ffw}$ = [$d_{ffw,1}$, ... , $d_{ffw,m}$]$^T$ 46 berechnet. Für die Vorsteuerung der Drehzahl $n_{soll}$ = [$n_{soll,1}$, ... , $n_{soll,m}$]$^T$ werden mithilfe der Kinematik-Transformation (Kin-Trafo) die Sollgeschwindigkeiten aus dem sechsdimensionalen Koordinatensystem der Last in das m-dimensionale Koordinatensystem der Antriebe überführt. So geht die Sollwertposition p_soll in eine Lageregelung 41. Danach wird eine kinematische Transformation 43 durchgeführt, wonach dieser Wert zusammen mit der Solldrehzahl $n_{soll}$ in einer Antriebsregelung 44 verarbeitet wird. Die z.B. über ein mathematisches Modell in den Vorsteuerungspfaden ermittelten Drehzahlen $n_{soll}$ und Drehmomente $d_{ffw}$ werden an den jeweiligen Vergleichseinrichtungen der Regelschleifen aufgeschaltet. Die Solldrehzahl $n_{soll}$ ergibt sich aus einer ersten Ableitung von p_soll 47 und einer anschließenden kinematischen Transformation 42.

Die Darstellung nach FIG 4 zeigt einen weiteren Teil eines Steuerungskonzepts. Neben einer Trajektoriengenerierung 77 ist ein Lastmodell 51 dargestellt. Eine Sollbahn ist durch die Sollwerte von p 58, $\dot{p}$ 57, $\ddot{p}$ 56 gegeben. Aus der Sollbahn (p, $\dot{p}$, $\ddot{p}$) 58,57,56 werden mit der 6-dimensionalen Bewegungsgleichung 59 $w = M(p)\ddot{p} + N(\dot{p},p) + G(p)$ mit:

M(p)     die Massenmatrix
$N(\dot{p}, p)$     die Matrix der Zentrifugal- und Corioliskräfte
G(p)     die Matrix der Gewichtskräfte

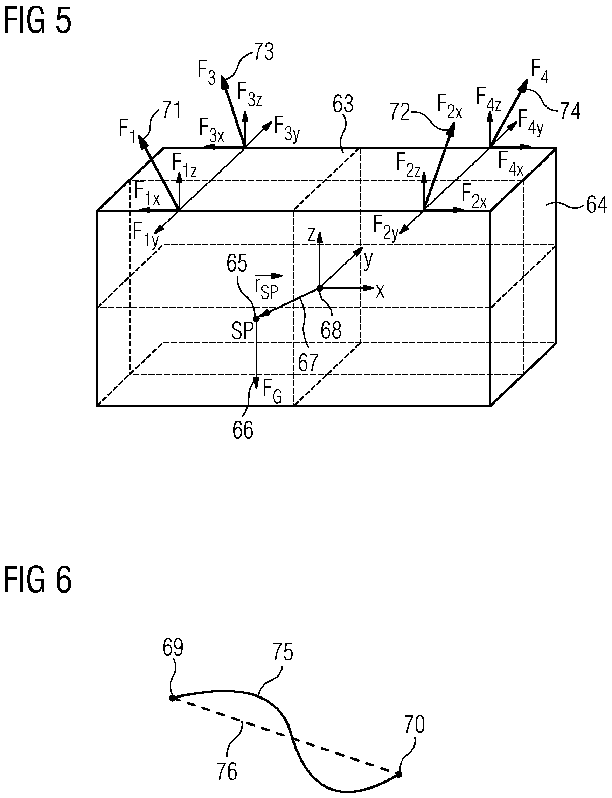

die auf die Last wirkenden Kräfte F 61 berechnet, wobei hierfür ein Lastmodell 51 vorgesehen ist. Der Kraftvektor $w$ 59 bezieht sich auf die Lastkoordinaten. Über eine Seilkraftberechnung 53 ergeben sich die Kräfte 61. Im Steuerungskonzept wird anhand eines mathematischen Lastmodells eine optimierte Drehmomentenvorsteuerung $d_{ffw}$ = [$d_{ffw,1}$, ... , $d_{ffw,m}$]$^T$ 62 für die $m$ Antriebseinheiten berechnet. Hierzu müssen die Masse der Last und die Lage des Massenmittelpunktes bekannt sein. Für eine gegebene Sollbahn (p, $\dot{p}$, $\ddot{p}$) in Lastkoordinaten wird mithilfe des mathematischen Modells eine optimierte Drehmomentenvorsteuerung $d_{ffw}$ auf Basis eines Modells 54 für den Antriebsstrang berechnet. Mit der Gleichgewichtsbedingung $A^T(p)F = w$ kann der sechsdimensionale Kraftvektor $w$ in den Seilkraftvektor $F$ transformiert werden. Der Seilkraftvektor $F$ = [$F_1$, ... , $F_m$]$^T$ beinhaltet die betragsmäßige Seilkraft jedes Seils in Richtung der Antriebskoordinaten (siehe FIG 5). Das Aufstellen der Gleichgewichtsbedingung erfolgt anhand der geometrischen Anordnung der Seile. Die Matrix $A^T(p)$ beinhaltet unter anderem die m normierten Seilkraftrichtungsvektoren und die Lage der Kraftangriffspunkte.

Die Winkelbeschleunigung der m Antriebsstränge 60 ($\ddot{\psi}$ = [$\ddot{\psi}_1$, ... , $\ddot{\psi}_m$]$^T$) ergibt sich aus einer kinematischen Transformation 52 der zweiten Ableitung von $p_{soll}$.

Die Darstellung nach FIG 5 zeigt beispielhaft eine Definition der Kraftvektoren für die Gleichgewichtsbedingungen in einem vereinfachten, leichter darstellbaren Fall einer Lastaufhängung mit 4 Seilen. Dargestellt sind die Kräfte 71, 72, 73, 74 an einem Spreader 63, welcher einen Container greift, mit einem Bezugskoordinatensystem 68 einem Schwerpunkt SP 65 und einem Versatz 67 des Schwerpunktes zum Nullpunkt des Bezugskoordinatensystems.

Die Darstellung nach FIG 6 zeigt eine optimierte Bahn 75. Beispielsweise kann ein kürzester Weg 76 zischen einem Startpunkt 69 und einem Endpunkt 70 bezüglich maximaler Seilkräfte optimiert werden, woraus sich die optimierte Bahn 75 ergibt.

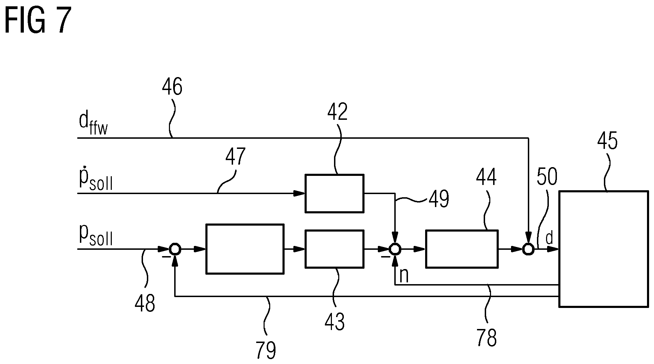

Die Darstellung nach FIG 7 zeigt eine Regelungsstruktur und basiert auf FIG 3. In FIG 7 ist eine Rückführung 79 der Position p gezeigt, welche vom Wert 48 $p_{soll}$ subtrahiert wird und in die Lageregelung 41 eingeht. Der Ausgang der Lageregelung wird kinematisch transformiert 43 und mit der Rückführung 78 einer Istdrehzahl n des entsprechenden zu regelnden elektrischen Antriebes verknüpft.

**Patentansprüche**

1. Steuerungseinrichtung (12) für ein Hebezeug (1), mit einer kinematischen Transformation (42,43), wobei eine Raumlage eines Körpers (8,9) und eine Orientierungslage des Körpers (8,9) zur Transformation vorgesehen ist, wobei eine Vielzahl von elektrischen Antrieben ansteuerbar sind, wobei das Hebezeug (1) für ein Bewegen des Körpers (8,9) durch das Hebezeug (1) überbestimmt ist,

**dadurch gekennzeichnet, dass** die Steuerungseinrichtung (12) einen Seilkraftrechner (53) aufweist.

2. Steuerungseinrichtung (12) nach Anspruch 1, wobei eine Optimierungseinrichtung zur Optimierung von Seilkräften vorgesehen ist.

3. Steuerungseinrichtung (12) nach Anspruch 1 oder 2, welche einen Lageregler (41) aufweist, wobei der Lageregler (41) einen Eingang für die Raumlage und einen Eingang für die Orientierungslage aufweist.

4. Steuerungseinrichtung (12) nach einem der Ansprüche 1 bis 3, welche ein erstes Modell für den Körper (8,9) aufweist.

5. Steuerungseinrichtung (12) nach einem der Ansprüche 1 bis 4, welche ein zweites Modell (54) für einen Antriebsstrang aufweist.

6. Steuerungseinrichtung (12) nach einem der Ansprüche 1 bis 5, welche eine Vorsteuerung (46) aufweist.

7. Verfahren zur Steuerung eines Hebezeuges (1), wobei zur Regelung von zumindest sechs Antrieben eine kinematische Transformation von Koordinaten eines Körpers (8,9) verwendet wird,
**dadurch gekennzeichnet, dass** eine Seilkraftberechung (53) verwendet wird.

8. Verfahren nach Anspruch 7, wobei eine Vielzahl von elektrischen Antrieben zur Positionierung des Körpers (8,9) vorgesehen sind, wobei durch die Vielzahl der elektrischen Antriebe eine Überbestimmung erzeugt wird, wobei die Überbestimmung zu einer Verteilung von Kräften, welche auf Seile (7) wirken, verwendet wird.

9. Verfahren nach Anspruch 7 oder 8, wobei aus einem Sollgeschwindigkeitsverlauf einer Trajektorie des Körpers (8,9) unter Verwendung einer Kinematik-Transformation ein Drehzahlsollwertverlauf der Antriebe berechnet wird.

10. Verfahren nach einem der Ansprüche 7 bis 9, wobei eine Vorsteuerung (46) verwendet wird.

11. Verfahren nach Anspruch 10, wobei zur Berechnung der Vorsteuerung ein Lastmodell (51) und/oder ein Antriebsstrangmodell (54) verwendet wird.

12. Verfahren nach einem der Ansprüche 7 bis 11, wobei eine Antriebsregelung in Abhängigkeit einer Hubhöhe oder einer Streckendynamik regelt, insbesondere adaptiert, wobei sich die Änderung der Streckendynamik insbesondere aus der Hubhöhe ergibt.

13. Verfahren nach einem der Ansprüche 7 bis 12, wobei eine Lageregelung (41) in den Koordinaten des Körpers (8,9) erfolgt, wobei insbesondere eine Stellgröße für die Last über eine Kinematik-Transformation in Antriebskoordinaten umgerechnet wird.

14. Verfahren nach einem der Ansprüche 7 bis 13, wobei bei einem Hubseilwerk, welches überbestimmt ist und insbesondere mehr Antriebe als zu positionierende Freiheitsgrade aufweist, die zusätzlichen Freiheitsgrade für eine Optimierung der Vorsteuerung verwendet werden.

15. Verfahren nach einem der Ansprüche 7 bis 14, wobei zur Berechnung einer Trajektorie ein Maximalwert einer Beschleunigung in Abhängigkeit einer Hubhöhe adaptiert wird.

16. Verfahren nach einem der Ansprüche 7 bis 15, wobei zur Berechnung einer Trajektorie ein Maximalwert einer Beschleunigung in Abhängigkeit einer Schwerpunktlage des Körpers (8,9) adaptiert wird.

17. Verfahren nach einem der Ansprüche 7 bis 16, wobei zur Minimierung einer maximalen Seilkraft eine Trajektorie gewählt und/oder verändert wird.

18. Verfahren nach einem der Ansprüche 7 bis 17, wobei eine Steuerungseinrichtung nach einem der Ansprüche 1 bis 7 verwendet wird.

**Claims**

1. Control facility (12) for a hoisting gear (1), having a kinematic transformation (42, 43), wherein a spatial position of a body (8, 9) and an orientation position of the body (8, 9) is provided for transformation, wherein a plurality of electrical drives can be actuated, wherein the hoisting gear (1) is overdetermined for a movement of the body (8, 9) by the hoisting gear (1),
**characterised in that** the control facility (12) has a rope force computer (53).

2. Control facility (12) according to claim 1, wherein an optimisation facility is provided to optimise rope forces.

3. Control facility (12) according to claim 1 or 2, which has a position controller (41), wherein the position controller (41) has an input for the spatial position and an input for the orientation position.

4. Control facility (12) according to one of claims 1 to 3, which has a first model for the body (8, 9).

5. Control facility (12) according to one of claims 1 to 4, which has a second model (54) for a drive train.

6. Control facility (12) according to one of claims 1 to 5, which has a pilot control (46).

7. Method for controlling a hoisting gear (1), wherein a kinematic transformation of coordinates of a body (8, 9) is used to control at least six drives,
**characterised in that** a rope force calculation (53) is used.

8. Method according to claim 7, wherein a plurality of electrical drives is provided to position the body (8, 9), wherein an overdetermination is generated by the plurality of electrical drives, wherein the overdetermination is used to distribute forces which act on ropes (7).

9. Method according to claim 7 or 8, wherein a rotation speed setpoint curve of the drives is calculated from a desired speed curve of a trajectory of the body (8, 9) using a kinematic transformation.

10. Method according to one of claims 7 to 9, wherein a pilot control (46) is used.

11. Method according to claim 10, wherein a load model (51) and/or a drive train model (54) is used to calculate the pilot control.

12. Method according to one of claims 7 to 11, wherein a drive control controls, in particular adapts, as a function of a hoisting height and/or a path dynamics, wherein the change in the path dynamics is produced in particular from the hoisting height.

13. Method according to one of claims 7 to 12, wherein a position control (41) takes place in the coordinates of the body (8, 9), wherein in particular a manipulated variable for the load is converted into drive coordinates by way of a kinematic transformation.

14. Method according to one of claims 7 to 13, wherein with a hoist rope structure, which is overdetermined and in particular has more drives than degrees of freedom to be positioned, the additional degrees of freedom are used for optimisation of the pilot control.

15. Method according to one of claims 7 to 14, wherein in order to calculate a trajectory, a maximum value of an acceleration is adapted as a function of a hoisting height.

16. Method according to one of claims 7 to 15, wherein in order to calculate a trajectory, a maximum value of an acceleration is adapted as a function of a centre of gravity of the body (8, 9).

17. Method according to one of claims 7 to 16, wherein in order to minimise a maximum rope force, a trajectory is selected and/or changed.

18. Method according to one of claims 7 to 17, wherein a control facility according to one of claims 1 to 7 is used.

**Revendications**

1. Dispositif (12) de commande d'un engin (1) de levage, comprenant une transformation (42, 43) cinématique, dans lequel il est prévu, pour la transformation, une position dans l'espace d'un corps (8, 9) et une position en orientation du corps (8, 9), dans lequel une pluralité d'entraînements électriques peuvent être commandés, dans lequel l'engin (1) de levage est surdéterminé pour un déplacement du corps (8, 9) par l'engin (1) de levage, **caractérisé en ce que** le dispositif (12) de commande comporte un calculateur (53) d'une force de câble.

2. Dispositif (12) de commande suivant la revendication 1, dans lequel il est prévu un dispositif d'optimisation pour l'optimisation de forces de câble.

3. Dispositif (12) de commande suivant la revendication 1 ou 2, qui a un régleur (41) de position, dans lequel le régleur (41) de position a une entrée pour la position dans l'espace et une entrée pour la position en orientation.

4. Dispositif (12) de commande suivant l'une des revendications 1 à 3, qui a un premier modèle du corps (8, 9).

5. Dispositif (12) de commande suivant l'une des revendications 1 à 4, qui a un deuxième modèle (54) d'une chaîne cinématique.

6. Dispositif (12) de commande suivant l'une des revendications 1 à 5, qui a un pilotage (46).

7. Procédé de commande d'un engin (1) de levage, dans lequel on utilise, pour la régulation d'au moins six entraînements, une transformation cinématique de coordonnées d'un corps (8, 9), **caractérisé en ce que** l'on utilise un calcul (53) de force de câble.

8. Procédé suivant la revendication 7, dans lequel il est prévu une pluralité d'entraînements électriques de mise en position du corps (8, 9), dans lequel on produit, par la pluralité des entraînements électriques, une surdétermination, dans lequel on utilise la surdétermination pour une répartition de forces, qui s'appliquent à des câbles (7).

9. Procédé suivant la revendication 7 ou 8, dans lequel, à partir d'une courbe de vitesse de consigne d'une trajectoire du corps (8, 9), on calcule une courbe de valeur de consigne d'une vitesse de rotation des entraînements, en utilisant une transformation cinématique.

10. Procédé suivant l'une des revendications 7 à 9, dans lequel on utilise un pilotage (46).

11. Procédé suivant la revendication 10, dans lequel, pour le calcul du pilotage, on utilise un modèle (51) de charge et/ou un modèle (54) de chaîne cinématique.

12. Procédé suivant l'une des revendications 7 à 11, dans lequel une régulation d'entraînement régule, en particulier adapte, en fonction d'une hauteur de course ou d'une dynamique de parcours, dans lequel la modification de la dynamique de parcours est donnée, en particulier à partir de la hauteur de course.

13. Procédé suivant l'une des revendications 7 à 12, dans lequel il s'effectue une régulation (41) de position dans les coordonnées du corps (8, 9), dans lequel en particulier on recalcule une grandeur de réglage de la charge par une transformation cinématique en des coordonnées d'entraînement.

14. Procédé suivant l'une des revendications 7 à 13, dans lequel, pour un engin à câble de levage, qui est surdéterminé et qui a, en particulier plusieurs entraînements, on utilise, comme degrés de liberté à mettre en position, les degrés de liberté supplémentaires pour une optimisation du pilotage.

15. Procédé suivant l'une des revendications 7 à 14, dans lequel, pour le calcul d'une trajectoire, on adapte une valeur maximum d'une accélération en fonction d'une hauteur de course.

16. Procédé suivant l'une des revendications 7 à 15, dans lequel, pour le calcul d'une trajectoire, on adapte une valeur maximum d'une accélération en fonction d'une position du centre de gravité du corps (8, 9).

17. Procédé suivant l'une des revendications 7 à 16, dans lequel on choisit et/ou on modifie une trajectoire pour minimiser une force maximum de câble.

**18.** Procédé suivant l'une des revendications 7 à 17, dans lequel on utilise un dispositif de commande suivant l'une des revendications 1 à 7.

FIG 1

FIG 2

FIG 3

FIG 4

FIG 5

FIG 6

## FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2902356 A1
- DE 2002745 A1
- WO 2016161470 A1
- DE 19918449 A1